# EUROPEAN PATENT APPLICATION

(11) **EP 4 106 139 A1**
(43) Date of publication of application: **21.12.2022**
(21) Application number: 20920989.9
(22) Date of filing: 27.02.2020
(51) Int. Cl.: H02J 7/02

(54) **CONNECTING BOX, TEST BENCH OF ELECTRIC VEHICLE, AND CONTROL METHOD AND DEVICE**

(71) Applicant: HUAWEI TECHNOLOGIES CO., LTD., Shenzhen, Guangdong 518129 (CN)
(72) Inventor: LU, Xiunan, Shenzhen, Guangdong 518129 (CN); LIU, Liliang, Shenzhen, Guangdong 518129 (CN); FANG, Baojin, Shenzhen, Guangdong 518129 (CN); SHI, Shanghui, Shenzhen, Guangdong 518129 (CN)
(74) Representative: Goddar, Heinz J.
(86) International application number: PCT/CN2020/077037
(87) International publication number: WO 2021/168756

(57) **Abstract**

Embodiments of this application provide a connection box, a test bench of an electric vehicle, and a control method and apparatus, and relate to the field of electric vehicles, to resolve a problem that an energy flow on a test bench of an electric vehicle is fixed and uncontrollable, thereby extending test functions of the test bench of the electric vehicle. The connection box is used for a test bench of an electric vehicle, and the connection box is separately coupled to a battery pack, a vehicle load, and a power supply device on the test bench of the electric vehicle. When the connection box electrically connects the battery pack and the vehicle load, the battery pack supplies power to the vehicle load. When the connection box electrically connects the battery pack and the power supply device, the power supply device charges the battery pack, or the battery pack discharges into the power supply device. When the connection box electrically connects the power supply device and the vehicle load, the power supply device supplies power to the vehicle load. This can be used for component testing of an electric vehicle and an intelligent vehicle.

## Description

### TECHNICAL FIELD

This application relates to the field of electric vehicles, and in particular, to a connection box, a test bench of an electric vehicle, and a control method and apparatus.

### BACKGROUND

As environmental problems such as energy crisis, global warming, and environmental pollution are becoming worse, electric vehicles are becoming a direction of future automobile development. An electric vehicle is a complex electromechanical system including a plurality of assemblies (systems) such as a battery system (including a battery pack and a management system of the battery pack), a motor system (or a drive load, including a motor and a control system of the motor), and a vehicle control system. Even with a high-performance battery system, motor system and vehicle control system, and the like, a high-performance electric vehicle may not be implemented. A key issue thereof is whether their respective excellent performance can be fully achieved.

At present, assemblies of an electric vehicle are mainly commissioned on the vehicle. However, data collection is affected by space of the vehicle and a measured road. It is difficult to perform fault diagnosis and parts replacement after faults and problems occur. In addition, due to road influence, a required working condition cannot accurately appear, and calibration and tests of a powertrain system are affected. To resolve the foregoing problems and implement safe, efficient, energy-saving, and low-cost operation of an electric vehicle, a proper battery system, motor system, vehicle control system, and the like are usually selected, and matching, joint commissioning, optimization, and calibration are performed on a test bench of the electric vehicle to mitigate impact of the measured road, save a matching and commissioning time, save matching and commissioning costs of the actual vehicle, and reduce a vehicle development time.

During a test, high-voltage components on the test bench of the electric vehicle mainly include: a battery pack, a drive load, a dynamometer, a frequency conversion power distribution cabinet coupled to the dynamometer, and a power supply device (a charging pile or a power simulator). Main high-voltage components, namely, the battery pack, the drive load, and the power supply device are usually coupled in an L-shaped manner, that is, the power supply device is coupled to the battery pack, and the battery pack is coupled to the drive load. In this way, a charging loop between the power supply device and the battery pack and a discharging loop between the battery pack and the drive load are implemented. As a result, energy on the test bench of the electric vehicle can flow only in the foregoing charging loop and discharging loop, and the energy flow is fixed and uncontrollable, which restricts test functions of the test bench of the electric vehicle.

### SUMMARY

Embodiments of this application provide a connection box, an electric vehicle test bench, and a control method and apparatus, to resolve a problem that an energy flow on a test bench of an electric vehicle is fixed and uncontrollable, thereby extending test functions of the test bench of the electric vehicle.

To achieve the foregoing objectives, this application uses the following technical solutions:

According to a first aspect, a connection box is provided, used for a test bench of an electric vehicle, where the connection box is separately coupled to a battery pack, a vehicle load, and a power supply device on the test bench of the electric vehicle; and the connection box in a first state is configured to electrically connect the battery pack and the vehicle load, the connection box in a second state is configured to electrically connect the battery pack and the power supply device, and the connection box in a third state is configured to electrically connect the power supply device and the vehicle load. When the connection box electrically connects the battery pack and the vehicle load, the battery pack supplies power to the vehicle load. When the connection box electrically connects the battery pack and the power supply device, the power supply device charges the battery pack, or the battery pack discharges into the power supply device. For example, the power supply device may have two states: a power supply state and a power absorption state. In the power supply state, the power supply device can charge the battery pack, or in the power absorption state, the battery pack can discharge into the power supply device. When the connection box electrically connects the power supply device and the vehicle load, the power supply device supplies power to the vehicle load. In this way, the connection box can separately electrically connect the battery pack and the vehicle load, or electrically connect the battery pack and the power supply device, or electrically connect the power supply device and the vehicle load. Therefore, when the connection box electrically connects the battery pack and the vehicle load, the battery pack supplies power to the vehicle load, thereby implementing a power supply loop between the battery pack and the vehicle load. When the connection box electrically connects the battery pack and the power supply device, the power supply device charges the battery pack, thereby implementing a charging loop in which the power supply device charges the battery pack, or when the connection box electrically connects the battery pack and the power supply device, the battery pack discharges into the power supply device, thereby implementing a discharging loop in which the battery pack discharges into the power supply device. When the connection box electrically connects the power supply device and the vehicle load, the power supply device supplies power to the vehicle load, thereby implementing a power supply loop from the power supply device to the vehicle load. The foregoing implements a plurality of loops of an energy flow on the test bench of the electric vehicle, implements a flexibly controllable energy flow, and expands test functions of the test bench of the electric vehicle.

In a possible design, this application provides a specific internal structure of a connection box. The connection box includes a first switch, a third switch, and a fourth switch, where a first end of the first switch is coupled to a first end of the power supply device, a second end of the first switch is coupled to a second end of the third switch, and the second end of the first switch is coupled to a second end of the fourth switch; a first end of the third switch is coupled to a first end of the battery pack, and a first end of the fourth switch is coupled to a first end of the vehicle load; and a second end of the power supply device, a second end of the vehicle load, and a second end of the battery pack are coupled to a common power cable. When the third switch and the fourth switch are closed, and the first switch is open, the battery pack and the vehicle load are electrically connected, and the battery pack supplies power to the vehicle load. When the first switch and the third switch are closed, and the fourth switch is open, the power supply device and the vehicle load are electrically connected, and the power supply device supplies power to the vehicle load. When the first switch and the fourth switch are closed, and the third switch is open, the battery pack and the power supply device are electrically connected, and when the power supply device is in the power supply state, the battery pack is charged, or when the power supply device is in the power absorption state, the battery pack discharges into the power supply device.

In a possible design, the connection box further includes a second switch and a diode, where an anode of the diode is coupled to the first end of the power supply device, a first end of the second switch is coupled to a cathode of the diode, and a second end of the second switch is coupled to the second end of the first switch. When the second switch and the third switch are closed, and the first switch and the fourth switch are open, the battery pack and the power supply device are electrically connected, the power supply device is in the power supply state, and the battery pack is charged. Because the diode has a unidirectional conduction characteristic, when the power supply device charges the battery pack by using a loop formed by the diode, the second switch, and the third switch that are connected in series, a current backflow can be prevented. In addition, another manner in which the power supply device supplies power to the vehicle load is provided. When the second switch and the fourth switch are closed, and the first switch and the third switch are open, the power supply device and the vehicle load are electrically connected, and the power supply device supplies power to the vehicle load.

In a possible design, to detect a current in a loop between the power supply device and the battery pack, a current in a loop between the power supply device and the vehicle load, and a current in a loop between the battery pack and the vehicle load, the connection box further includes one or more of the following: a first current sensor coupled between the first end of the power supply device and the first end of the first switch; a second current sensor coupled between the first end of the battery pack and the first end of the third switch; and a third current sensor coupled between the first end of the vehicle load and the fourth switch.

In a possible design, the connection box further includes one or more of the following: a first fuse coupled between the second end of the first switch and the second end of the third switch; and a second fuse coupled between the second end of the first switch and the second end of the fourth switch. In this way, a fuse blows, provided that a current exceeding a fuse current passes through a loop on which the fuse is located, thereby preventing a device damage caused by an overcurrent.

According to a second aspect, a control method for a test bench of an electric vehicle is provided, and is used for a test bench of an electric vehicle. A connection box on the test bench of the electric vehicle is separately coupled to a battery pack, a vehicle load, and a power supply device on the test bench of the electric vehicle. The method includes: when it is determined that a to-be-tested object is the battery pack, controlling the connection box to electrically connect the battery pack and the power supply device, so that the power supply device charges the battery pack or the battery pack discharges into the power supply device; or when it is determined that a to-be-tested object is the vehicle load, if it is determined that an energy source is the power supply device, controlling the connection box to electrically connect the power supply device and the vehicle load, so that the power supply device supplies power to the vehicle load, or if it is determined that an energy source is the battery pack, controlling the connection box to electrically connect the battery pack and the vehicle load, so that the battery pack supplies power to the vehicle load. In this way, because the connection box is separately coupled to the battery pack, the vehicle load, and the power supply device on the test bench of the electric vehicle, the method can be used to control the connection box to separately electrically connect the battery pack and the vehicle load, or electrically connect the battery pack and the power supply device, or electrically connect the power supply device and the vehicle load. Therefore, when the battery pack and the vehicle load are electrically connected, the battery pack supplies power to the vehicle load, thereby implementing a power supply loop between the battery pack and the vehicle load. When the battery pack and the power supply device are electrically connected, the power supply device charges the battery pack, thereby implementing a charging loop in which the power supply device charges the battery pack, or when the battery pack and the power supply device are electrically connected, the battery pack discharges into the power supply device, thereby implementing a discharging loop in which the battery pack discharges into the power supply device. When the power supply device and the vehicle load are electrically connected, the power supply device supplies power to the vehicle load, thereby implementing a power supply loop from the power supply device to the vehicle load. The foregoing implements a plurality of loops of an energy flow on the test bench of the electric vehicle, implements a flexibly controllable energy flow, and expands test functions of the test bench of the electric vehicle.

In a possible design, the connection box includes a first switch, a second switch, and a third switch, where a first end of the first switch is coupled to a first end of the power supply device, a second end of the first switch is coupled to a second end of the third switch, and the second end of the first switch is coupled to a second end of the fourth switch; a first end of the third switch is coupled to a first end of the battery pack, and a first end of the fourth switch is coupled to a first end of the vehicle load; and a second end of the power supply device, a second end of the vehicle load, and a second end of the battery pack are coupled to a common power cable. The controlling the connection box to electrically connect the battery pack and the power supply device includes: controlling the first switch and the fourth switch to be closed, and the third switch to be open, so that the battery pack and the power supply device are electrically connected, and when the power supply device is in a power supply state, the power supply device charges the battery pack, or when the power supply device is in a power absorption state, the battery pack discharges into the power supply device. The controlling the connection box to electrically connect the power supply device and the vehicle load includes: controlling the first switch and the third switch to be closed, and the fourth switch to be open, so that the power supply device and the vehicle load are electrically connected, and the power supply device supplies power to the vehicle load. The controlling the connection box to electrically connect the battery pack and the vehicle load includes: controlling the third switch and the fourth switch to be closed, and the first switch to be open, so that the battery pack and the vehicle load are electrically connected, and the battery pack supplies power to the vehicle load.

In a possible design, the connection box further includes a second switch and a diode, where an anode of the diode is coupled to the first end of the power supply device, a first end of the second switch is coupled to a cathode of the diode, and a second end of the second switch is coupled to the second end of the first switch. The controlling the connection box to electrically connect the battery pack and the power supply device includes: controlling the second switch and the third switch to be closed, and the first switch and the fourth switch to be open, so that the battery pack and the power supply device are electrically connected, and the power supply device is in the power supply state and charges the battery pack. The controlling the connection box to electrically connect the power supply device and the vehicle load includes: controlling the second switch and the fourth switch to be closed, and the first switch and the third switch to be open, so that the power supply device and the vehicle load are electrically connected, and the power supply device supplies power to the vehicle load.

In a possible design, the connection box further includes one or more of the following: a first current sensor coupled between the first end of the power supply device and the first end of the first switch; a second current sensor coupled between the first end of the battery pack and the first end of the third switch; and a third current sensor coupled between the first end of the vehicle load and the fourth switch. The method further includes: after it is determined that a test is completed, when the first switch and the fourth switch are closed, and the third switch is open, if it is determined that a current collected by the first current sensor meets a first condition and/or a current collected by the third current sensor meets a third condition, controlling the first switch and/or the fourth switch to be open; or after it is determined that a test is completed, when the first switch and the third switch are closed, and the fourth switch is open, if it is determined that a current collected by the first current sensor meets a first condition and/or a current collected by the second current sensor meets a second condition, controlling the first switch and/or the third switch to be open; or after it is determined that a test is completed, when the third switch and the fourth switch are closed, and the first switch is open, if it is determined that a current collected by the second current sensor meets a second condition and/or a current collected by the third current sensor meets a third condition, controlling the third switch and/or the fourth switch to be open. After the test is completed, each switch needs to be prevented from damage caused by disconnection of the switch with load, especially when the switch uses a relay. Because there is a contact process of a contact point during disconnection or connection of the switch with load, and a contact area of the contact point changes instantaneously during this process, there is a process in which a passing current increases or decreases instantaneously, which easily causes melting of the contact point of the relay, and affects a service life of the relay. Therefore, in this solution, after it is determined that the test is completed, a switch on a corresponding loop is switched off only when a current sensor on the loop detects a current meeting a specific condition, thereby preventing disconnection of the switch with load from affecting a service life of the switch.

In a possible design, the connection box further includes one or more of the following: a first current sensor coupled between the first end of the power supply device and the first end of the first switch; a second current sensor coupled between the first end of the battery pack and the first end of the third switch; and a third current sensor coupled between the first end of the vehicle load and the fourth switch. The method further includes: after it is determined that a test is completed, when the second switch and the third switch are closed, and the first switch and the fourth switch are open, if it is determined that a current collected by the first current sensor meets a first condition and/or a current collected by the second current sensor meets a second condition, controlling the second switch and/or the third switch to be open; or after it is determined that a test is completed, when the second switch and the fourth switch are closed, and the first switch and the third switch are open, if it is determined that a current collected by the first current sensor meets a first condition and/or a current collected by the third current sensor meets a third condition, controlling the second switch and/or the fourth switch to be open.

In a possible design, the connection box further includes one or more of the following: a first current sensor coupled between the first end of the power supply device and the first end of the first switch; a second current sensor coupled between the first end of the battery pack and the first end of the third switch; and a third current sensor coupled between the first end of the vehicle load and the fourth switch. The method further includes: when the first switch and the fourth switch are closed, and the third switch is open, if it is determined, based on a current collected by the first current sensor and/or a current collected by the third current sensor, that an abnormal working condition exists, controlling the first switch and/or the fourth switch to be open; or when the first switch and the third switch are closed, if it is determined, based on a current collected by the first current sensor and/or a current collected by the second current sensor, that an abnormal working condition exists, controlling the first switch and/or the third switch to be open; or when the third switch and the fourth switch are closed, and the first switch is open, if it is determined, based on a current collected by the second current sensor and/or a current collected by the third current sensor, that an abnormal working condition exists, controlling the third switch and/or the fourth switch to be open. In this design, detection of an abnormal working condition can be implemented based on a current in a loop. When an abnormal working condition such as a high current occurs in the loop, a switch in the loop can be actively switched off, to prevent damage to a device on the loop.

In a possible design, the connection box further includes one or more of the following: a first current sensor coupled between the first end of the power supply device and the first end of the first switch; a second current sensor coupled between the first end of the battery pack and the first end of the third switch; and a third current sensor coupled between the first end of the vehicle load and the fourth switch. The method further includes: when the second switch and the third switch are closed, and the first switch and the fourth switch are open, if it is determined, based on a current collected by the first current sensor and/or a current collected by the second current sensor, that an abnormal working condition exists, controlling the second switch and/or the third switch to be open; or when the second switch and the fourth switch are closed, and the first switch and the third switch are open, if it is determined, based on a current collected by the first current sensor and/or a current collected by the third current sensor, that an abnormal working condition exists, controlling the second switch and/or the fourth switch to be open.

According to a third aspect, a test bench control apparatus is provided, to implement the foregoing methods. The test bench control apparatus includes a corresponding module, unit, or means (means) for implementing the foregoing method. The module, unit, or means may be implemented by hardware, by software, or by hardware executing corresponding software. The hardware or software includes one or more modules or units corresponding to the foregoing functions.

According to a fourth aspect, a test bench control apparatus is provided, including a processor and a memory, where the memory is configured to store a computer instruction, and when the processor executes the instruction, the test bench control apparatus is enabled to perform the method according to any one of the foregoing aspects.

According to a fifth aspect, a test bench control apparatus is provided, including a processor. The processor is configured to: be coupled to a memory, and after reading an instruction in the memory, perform the method according to any one of the foregoing aspects based on the instruction.

According to a sixth aspect, a computer readable storage medium is provided. The computer readable storage medium stores an instruction, and when the instruction is run on a computer, the computer is enabled to perform the method in any one of the foregoing aspects.

According to a seventh aspect, a computer program product including an instruction is provided. When the instruction is run on a computer, the computer is enabled to perform the method in any one of the foregoing aspects.

According to an eighth aspect, a test bench control apparatus (for example, the test bench control apparatus may be a chip or a chip system) is provided. The test bench control apparatus includes a processor, configured to implement functions in any one of the foregoing aspects. In a possible design, the test bench control apparatus further includes a memory, and the memory is configured to store a necessary program instruction and data. When the test bench control apparatus is a chip system, the test bench control apparatus may include a chip, or may include a chip and another discrete device.

According to a ninth aspect, a test bench of an electric vehicle is provided, including the connection box according to any one of the first aspect or the possible designs of the first aspect.

For technical effects brought by any design of the third aspect to the ninth aspect, refer to technical effects brought by different designs in the first aspect or the third aspect. Details are not described herein again.

### BRIEF DESCRIPTION OF DRAWINGS

FIG. 1 is a schematic structural diagram of a test bench of an electric vehicle;
FIG. 2 is a schematic structural diagram of a test bench of an electric vehicle according to an embodiment of this application;
FIG. 3 is a schematic structural diagram of a test bench of an electric vehicle according to another embodiment of this application;
FIG. 4 is a schematic diagram of an internal structure of a connection box according to an embodiment of this application;
FIG. 5 is a schematic diagram of an internal structure of a connection box according to another embodiment of this application;
FIG. 6 is a schematic diagram of an internal structure of a connection box according to still another embodiment of this application;
FIG. 7 is a schematic diagram of an internal structure of a battery pack according to an embodiment of this application;
FIG. 8 is a schematic structural diagram of a test bench control apparatus of an electric vehicle according to an embodiment of this application;
FIG. 9 is a schematic flowchart of a control method for a test bench of an electric vehicle according to an embodiment of this application;
FIG. 10A and FIG. 10B are a schematic flowchart of a control method for a test bench of an electric vehicle according to another embodiment of this application; and
FIG. 11 is a schematic structural diagram of a test bench control apparatus of an electric vehicle according to another embodiment of this application.

### DESCRIPTION OF EMBODIMENTS

The following describes the technical solutions in the embodiments of this application with reference to the accompanying drawings in the embodiments of this application. It is clearly that the described embodiments are merely some rather than all of the embodiments of this application. In the descriptions of this application, unless otherwise specified, "/" indicates that associated objects are in an "or" relationship. For example, A/B may represent A or B. "And/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two. "At least one of the following items" or a similar expression means any combination of these items, including any combination of a single item or a plurality of items. For example, at least one of a, b, or c may represent a, b, c, a and b, a and c, b and c, or a, b, and c, where a, b, and c each may be singular or plural. In addition, the terms "first", "second", and the like are merely intended for a purpose of description, and shall not be understood as an indication or implication of relative importance or implicit indication of the number of indicated technical features. Therefore, a feature limited by "first", "second", or the like may explicitly or implicitly include one or more features. In the description of this application, unless otherwise stated, "a plurality of" means two or more than two.

In this application, unless otherwise expressly specified and limited, the term "connect" should be understood in a broad sense. For example, a "connection" may be a fixed connection, may be a detachable connection, or may be an integrated connection; and may be a direct connection, or an indirect connection through an intermediate medium. In addition, the term "coupling" may be a manner of an electrical connection for implementing signal transmission. The "coupling" may be a direct electrical connection, or may be an indirect electrical connection through an intermediate medium.

In this application, the switch mentioned is a separate switch, or a circuit that has a switch function and that is formed by a plurality of switch devices in serial and parallel connection. In addition, in two states of the switch mentioned in this application, "closed" means that two nodes connected in series to the switch are electrically connected, and "open" means that two nodes connected in series to the switch are disconnected. In some solutions, "closed" may also be referred to as "electrically connected", "switched on", or the like, and "open" may also be referred to as "open circuit", "cut off", or the like. Control of the two states of the switch may be considered as control of transition of the two states by using two control signals respectively. For example, when a first control signal is input, the switch is "closed", and when a second control signal is input, the switch is "open". In some examples, it may also be considered that the switch is in a normal state by default, and when a control signal is input, the switch changes to another state. For example, when a relay is used as a switch, a normal state of the relay may be an "open" state, and when an armature coil of the relay is powered on, a generated magnetic field attracts an armature so that the relay changes to a "closed" state. Certainly, the normal state of the relay may alternatively be the "closed" state, and when the armature coil of the relay is powered on, the generated magnetic field repels the armature so that the relay changes to the "open" state. In some examples, when a field effect transistor is used as a switch, a source electrode and a drain electrode of the field effect transistor are respectively connected to nodes on two sides, and a base electrode is used as an input end of a control signal. A normal state of the field effect transistor is a "cut off' state. When a specific voltage is input to the base electrode, the state of the field effect transistor changes to an "electrically connected" state, and the source electrode and the drain electrode are electrically connected to function as a switch. The switch mentioned in the embodiments of this application may be a switch device such as a relay or a field effect transistor.

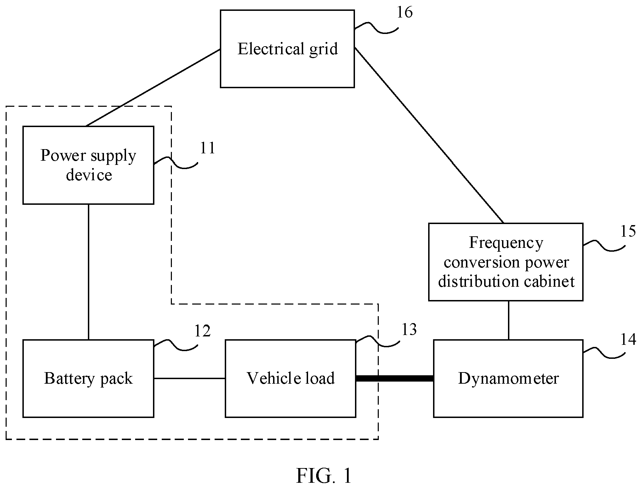

As shown in FIG. 1, in an existing test bench of an electric vehicle, high-voltage components mainly include: a power supply device 11 (which may also be referred to as a charging pile or a power simulator in different examples), a battery pack 12, a vehicle load 13 (in FIG. 1, a drive load or a motor system is described as an example of the vehicle load, where the drive load includes a motor, a drive frequency converter (which is usually an insulated gate bipolar transistor (insulated gate bipolar transistor, IGBT) circuit), and a motor control unit (motor control unit, MCU for short); in some examples, the vehicle load may further include high-voltage loads such as a heating system (for example, a (positive temperature coefficient, PTC) positive temperature coefficient resistor or a thermistor, also referred to as a vehicle heater), an air conditioning system (for example, an air compressor (air compressor, ACP)), and a direct current voltage converter (for example, direct current/direct current, DC/DC)), a dynamometer 14, and a frequency conversion power distribution cabinet 15 coupled to the dynamometer 14. FIG. 1 further shows an electrical grid 16. The electrical grid 16 can provide energy to the power supply device 11 or absorb energy released by the battery pack 12 and converted by the power supply device 11. The electrical grid 16 may further supply power to the frequency conversion power distribution cabinet 15 to provide energy for normal running of the dynamometer 14. Main high-voltage components, namely, the power supply device 11, the battery pack 12, and the vehicle load 13 are usually coupled in an L-shaped manner (a part in a dashed box in FIG. 1). To be specific, the power supply device 11 is coupled to the battery pack 12, and the battery pack 12 is coupled to the vehicle load 13. The power supply device 11 has two working states: a power supply state of charging a battery and a power absorption state of absorbing battery electric energy as a load. In this way, a charging loop and a discharging loop between the power supply device 11 and the battery pack 12 and a discharging loop between the battery pack 12 and the vehicle load 13 are implemented in the L-shaped coupling manner. As a result, energy on the test bench of the electric vehicle can flow only in the foregoing loops, the energy flow is fixed and uncontrollable, which restricts test functions of the test bench of the electric vehicle.

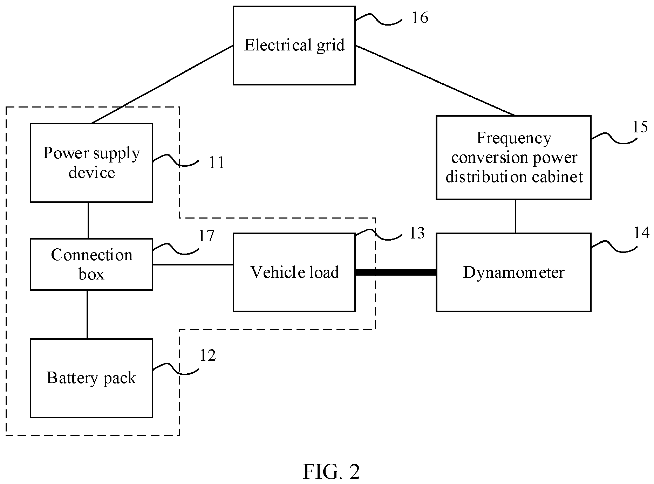

To resolve the foregoing problem, as shown in FIG. 2, an embodiment of this application provides a connection box. When the connection box is used for a test bench of an electric vehicle, the connection box 17 is separately coupled to a battery pack 12, a vehicle load 13, and a power supply device 11 on the test bench of the electric vehicle. The connection box 17 in a first state is configured to electrically connect the battery pack 12 and the vehicle load 13. The connection box 17 in a second state is configured to electrically connect the battery pack 12 and the power supply device 11. The connection box 17 in a third state is configured to electrically connect the power supply device 11 and the vehicle load 13. When the connection box 17 electrically connects the battery pack 12 and the vehicle load 13, a conducting path is formed between the battery pack 12 and the vehicle load 13, and the battery pack 12 supplies power to the vehicle load 13. When the connection box 17 electrically connects the battery pack 12 and the power supply device 11, a conducting path is formed between the battery pack 12 and the power supply device 11, and the power supply device 11 charges the battery pack 12, or the battery pack 12 discharges into the power supply device 11. When the connection box 17 electrically connects the power supply device 11 and the vehicle load 13, a conducting path is formed between the power supply device 11 and the vehicle load 13, and the power supply device 11 supplies power to the vehicle load 13.

FIG. 2 further shows an electrical grid 16. The electrical grid 16 can provide energy to the power supply device 11 or absorb energy released by the battery pack 12 and converted by the power supply device 11. The electrical grid 16 may further supply power to a frequency conversion power distribution cabinet 15 to provide energy for normal running of a dynamometer 14, so as to cooperate with charging and discharging tests of the battery pack

In this way, the connection box can separately electrically connect the battery pack and the vehicle load, or electrically connect the battery pack and the power supply device, or electrically connect the power supply device and the vehicle load. Therefore, when the connection box electrically connects the battery pack and the vehicle load, the battery pack supplies power to the vehicle load, thereby implementing a power supply loop between the battery pack and the vehicle load. When the connection box electrically connects the battery pack and the power supply device, the power supply device charges the battery pack, thereby implementing a charging loop in which the power supply device charges the battery pack, or when the connection box electrically connects the battery pack and the power supply device, the battery pack discharges into the power supply device, thereby implementing a discharging loop in which the battery pack discharges into the power supply device. When the connection box electrically connects the power supply device and the vehicle load, the power supply device supplies power to the vehicle load, thereby implementing a power supply loop from the power supply device to the vehicle load. The foregoing implements a plurality of loops of an energy flow on the test bench of the electric vehicle, implements a flexibly controllable energy flow, and expands test functions of the test bench of the electric vehicle.

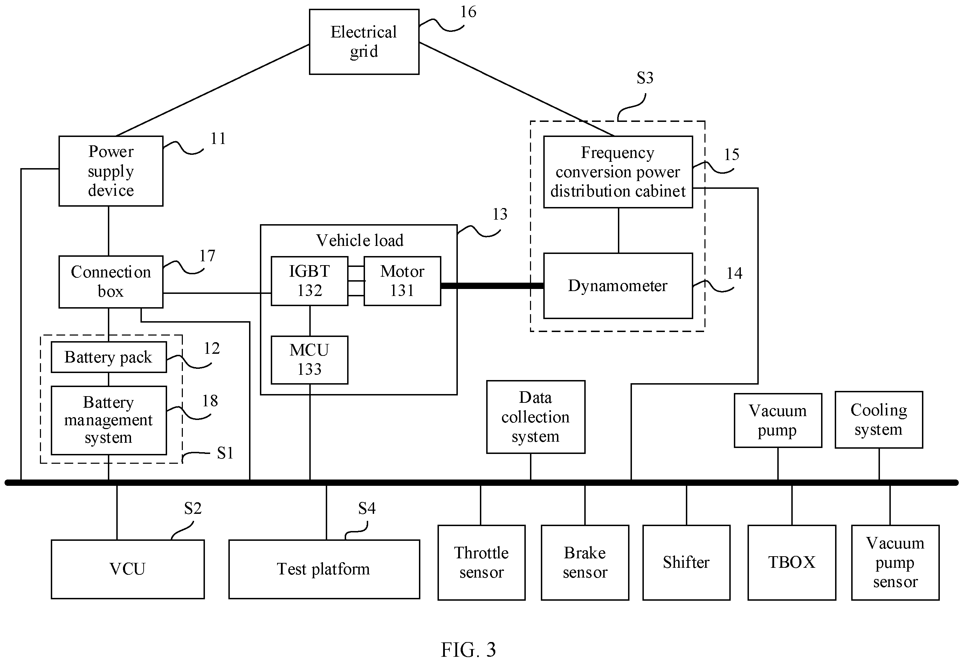

As shown in FIG. 3, in order to implement basic functions of a test bench of an electric vehicle, main components of the test bench of the electric vehicle usually include a battery system S1 (including a battery pack 12 and a battery management system (battery management system, BMS for short) 18 shown in FIG. 3), a vehicle load 13 (in FIG. 3, a drive load or a motor system is described as an example of the vehicle load, where the drive load includes a motor 131, a drive frequency converter (an IGBT is used as an example in FIG. 3) 132, and a motor control unit MCU 133; in some examples, the vehicle load may further include high voltage loads such as a heating system (for example, a PTC), an air conditioning system (for example, an ACP), a direct current voltage converter (for example, a DC/DC)), a vehicle control system S2 (vehicle controller unit, VCU for short), a dynamometer system S3 (including a dynamometer 14 and a frequency conversion power distribution cabinet 15), and a test platform S4. Components are connected through necessary lines. A specific line may be an electrical connection implemented by a hard wire, a connection in a signal bus manner, or a hardware connection implemented by a mechanical component depending on a test requirement. For example, components may be connected by a direct connection through a hard wire, or may be connected in a signal bus form such as a CAN bus or an EtherCAT bus, or connected by a transmission apparatus. For example, the VCU S2 is connected to the test platform S4 through a CAN bus, the test platform S4 is connected to the power supply device 11, the BMS 18, the MCU 133, and the frequency conversion power distribution cabinet 15 through a CAN bus, the VCU S2 is connected to the power supply device 11, the BMS 18, the MCU 133, and the frequency conversion power distribution cabinet 15 through a CAN bus, and the connection box 17 is connected to the battery pack 12, the power supply device 11, and the IGBT 132 through a hard wire. The MCU 133 is connected to the IGBT 132 through a hard wire. A transmission connection is implemented between the dynamometer 14 and the motor 131 by using a torsion meter. The frequency conversion power distribution cabinet 15 is connected to the dynamometer 14 through a hard wire. In addition, in order to implement a comprehensive test, a data collection system, a cooling system, a vacuum pump, a vacuum pump sensor, a throttle sensor, a brake sensor, a TBOX (telematics BOX, telematics box), and the like may be disposed on the test bench. The data collection system may include a power analyzer, a torque sensor, a rotational speed sensor, a temperature sensor, a vibration sensor, and the like. The data collection system is connected to the test platform, and sends obtained data to the test platform. For example, the power analyzer is connected to the dynamometer, and is configured to measure parameters such as power, a voltage, and a current of the dynamometer. The torque sensor and the rotational speed sensor are disposed in the torque meter, and are configured to measure a torque and a rotational speed of the dynamometer. The temperature sensor is disposed in the battery pack 12 and the motor 131, and is mainly configured to measure temperatures of the battery pack 12 and the motor 131. The vibration sensor is disposed on a component (for example, a motor 131) that generates vibration, and is configured to detect a vibration amount of the motor 131. As a vehicle control system, the VCU generally coordinates the in-vehicle controllers including components such as the BMS and MCU during a test process to achieve a specific control effect. However, the VCU does not control non-in-vehicle components such as the dynamometer, the power supply device, and the electrical grid. The test platform may be a computer, and the test personnel can operate test software on the test platform, control bus signals of controllers and components or hard wire signals of directly connected components, and configure test statuses for the controllers or components.

The foregoing merely describes a specific connection manner of the connection box in this application with reference to the test bench. In another example, another form of the test bench may be further provided, and a battery pack, a vehicle load, and a power supply device may be coupled through the connection box provided in this embodiment of this application, provided that the three devices are included in the test bench. Other components of the test bench are not limited in this embodiment of this application. For example, more or fewer components may be included in some examples. In addition, a specific test method for each component on the test platform is not limited in this application. For example, a test related to this application may include a battery pack test and a vehicle load test, for example, tests of charge/discharge speeds of a battery pack in different environments, a test of an aging degree of the battery pack, and a power test, torque and rotational speed tests, and a vibration test of the vehicle load. This embodiment of this application mainly relates to how to couple the battery pack, the vehicle load, and the power supply device in a test process by using the connection box provided in this embodiment of this application.

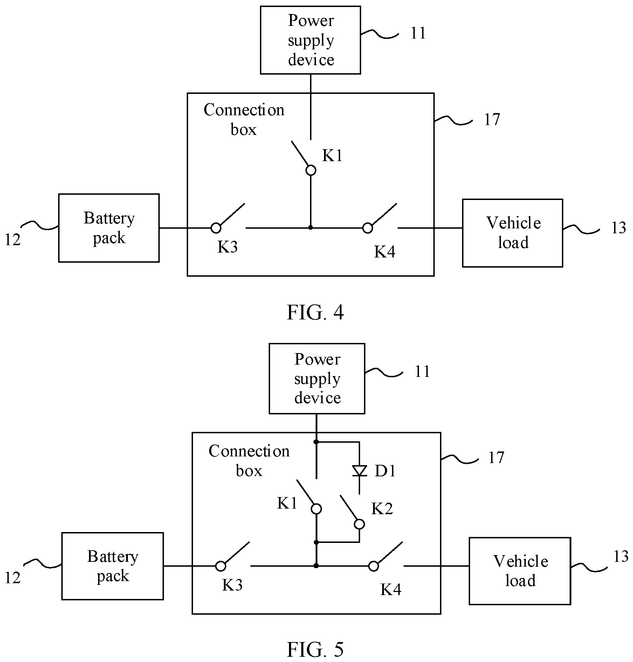

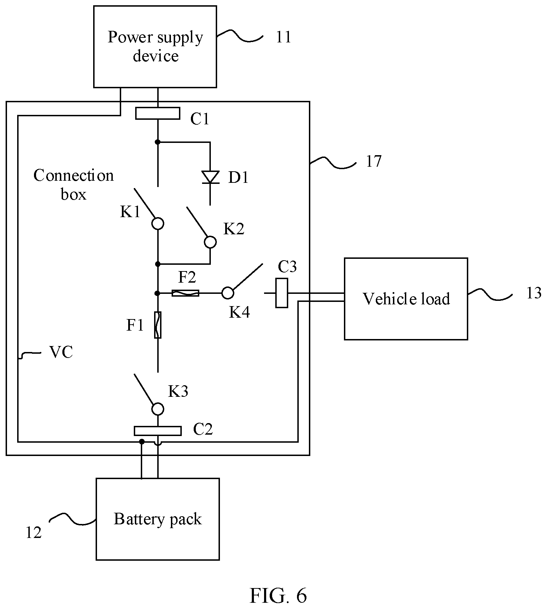

In some examples, as shown in FIG. 4, a specific structure of the connection box is provided, including a first switch K1, a third switch K3, and a fourth switch K4. A first end of the first switch K1 is coupled to a first end of the power supply device 11, and a second end of the first switch K1 is coupled to a second end of the third switch K3. The second end of the first switch K1 is coupled to a second end of the fourth switch K4. A first end of the third switch K3 is coupled to a first end of the battery pack 12, and a first end of the fourth switch K4 is coupled to a first end of the vehicle load 13. A second end of the power supply device 11, a second end of the vehicle load 13, and a second end of the battery pack 12 are coupled to a common power cable VC (referring to FIG. 6). When the third switch K3 and the fourth switch K4 are closed, and the first switch K1 is open, the battery pack 12 and the vehicle load 13 are electrically connected, and the battery pack 12 supplies power to the vehicle load 13. When the first switch K1 and the third switch K3 are closed, and the fourth switch K4 is open, the power supply device 11 and the vehicle load 13 are electrically connected, and the power supply device 11 supplies power to the vehicle load 13. When the first switch K1 and the fourth switch K4 are closed, and the third switch K3 is open, the battery pack 12 and the power supply device 11 are electrically connected, and when the power supply device 11 is in a power supply state, the battery pack 12 is charged, or when the power supply device 12 is in a power absorption state, the battery pack 12 discharges into the power supply device 11.

When the power supply device 12 is in the power supply state, the power supply device 12 can charge the battery pack 12 by closing the K1 and the K3. However, a current backflow risk may exist. To be specific, when a discharge current of the battery pack exceeds a charging current of the power supply device 11, an actual current flow direction is from the battery pack to the power supply device. Therefore, refer to FIG. 5. To prevent a current backflow phenomenon, the connection box further includes a second switch K2 and a diode D1. An anode of the diode D1 is coupled to the first end of the power supply device 11, a first end of the second switch K2 is coupled to a cathode of the diode D 1, and a second end of the second switch K2 is coupled to the second end of the first switch K1. In this way, when the second switch K2 and the third switch K3 are closed, and the first switch K1 and the fourth switch K4 are open, the battery pack 12 and the power supply device 11 are electrically connected, and the power supply device 11 is in the power supply state and charges the battery pack 12. Due to a unidirectional conduction effect of the diode D1, a current flow direction can be only from the power supply device 11 to the battery pack 12. In addition, because the second switch K2 is provided, when the power supply device 11 supplies power to the vehicle load 13, the power supply device 11 and the vehicle load 13 can also be electrically connected by closing the second switch K2 and the fourth switch K4 and opening the first switch K1 and the third switch K3, so that the power supply device 11 supplies power to the vehicle load 13.

Refer to FIG. 6. To detect a current in a loop between the power supply device and the battery pack, a current in a loop between the power supply device and the vehicle load, and a current in a loop between the battery pack and the vehicle load, the connection box further includes one or more of the following: a first current sensor C1 coupled between the first end of the power supply device 11 and the first end of the first switch K1; a second current sensor C2 coupled between the first end of the battery pack 12 and the first end of the third switch K3; and a third current sensor C3 coupled between the first end of the vehicle load 13 and the fourth switch K4. It may be understood that when K1 and K3 are closed, there are the first current sensor C1 and the third current sensor C3 in a loop formed by the power supply device, K1, K3, and battery pack, because currents in the entire loop are consistent, only C1 or C3 may be used to collect a current, or both C1 and C3 can be used to collect a current. When the switches are in different closed states, there are also two current sensors in a loop formed between the power supply device and the vehicle load and a loop formed between the battery pack and vehicle load. One or two of the current sensors may be used to collect a current.

In addition, to prevent a device damage caused by an overcurrent transmitted on a line, the connection box further includes one or more of the following: a first fuse F1 coupled between the second end of the first switch K1 and the second end of the third switch K3; and a second fuse F2 coupled between the second end of the first switch K1 and the second end of the fourth switch K4. In this way, a fuse blows, provided that a current exceeding a fuse blowing current of the corresponding fuse passes through any one of the loop between the power supply device and the battery pack, the loop between the power supply device and the vehicle load, or the loop between the battery pack and the vehicle load, thereby preventing damage to a device in each loop.

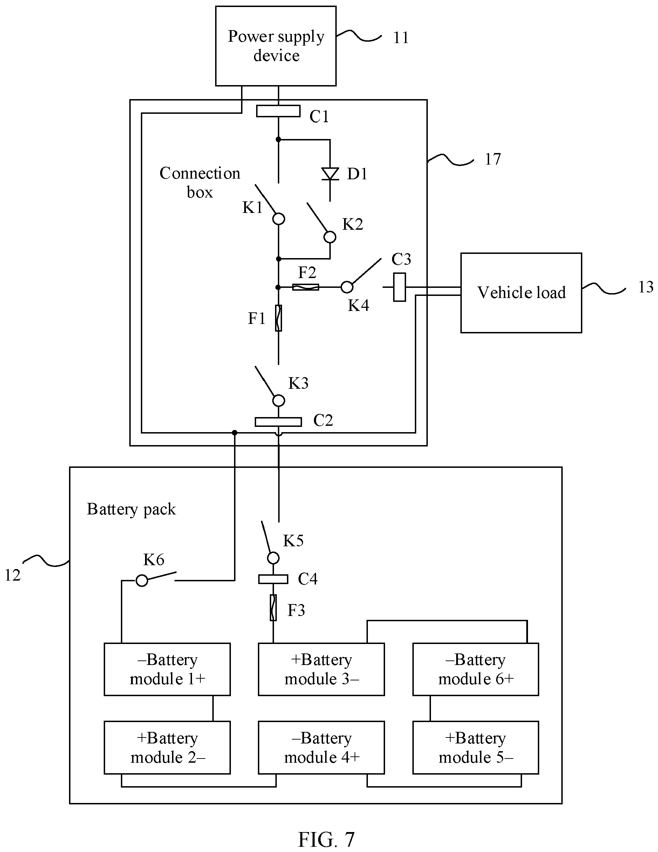

In some examples, as shown in FIG. 7, a security loop is usually further arranged in the battery pack 12. For example, a battery module 3, a battery module 6, a battery module 5, a battery module 4, a battery module 2, and a battery module 1 are sequentially connected in series in the battery pack (according to the foregoing sequence, a positive electrode (+) of a next battery module in two adjacent battery modules is connected to a negative electrode (-) of a previous battery module). The security loop includes a third fuse F3, a fourth current sensor C4, and a fifth switch K5 connected in series between a positive electrode (+) of the battery module 3 and the first end of the battery pack switch; and a sixth switch K6 connected in series between a negative electrode (-) of the battery module 1 and the second end of the battery pack. The BMS may control K5 and K6 to be closed or open. For example, when an abnormal working condition (for example, when a relatively large current may damage the battery pack or a vehicle load connected to the battery pack) is detected by using the fourth current sensor C4, the BMS actively disconnects K5 and K6. Certainly, when a large current exists, security protection may also be implemented by blowing the third fuse F3.

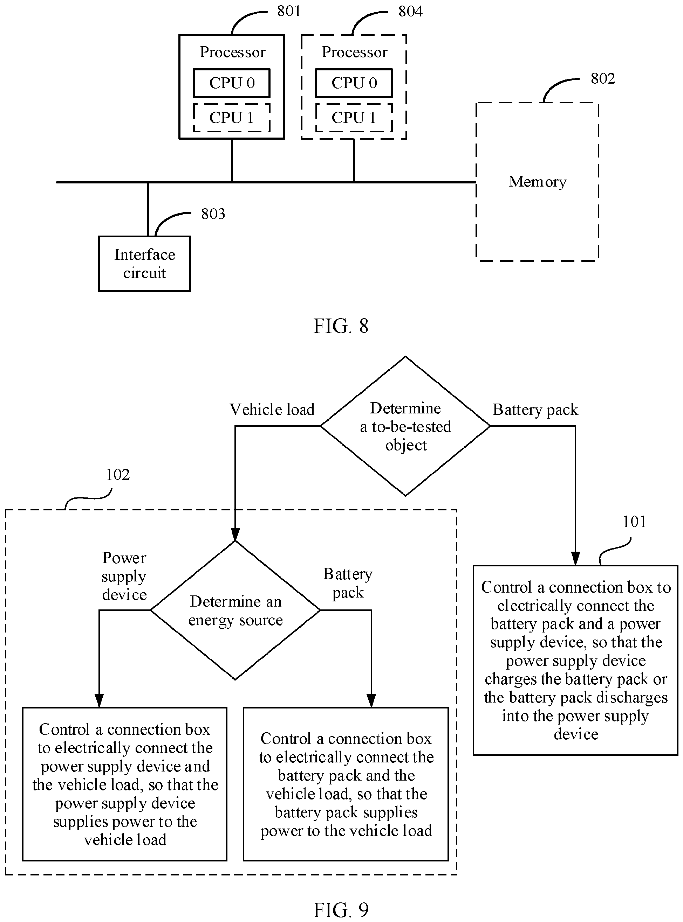

In test methods provided in the following solutions of this application, control of a connection box by a test bench control apparatus is mainly described. The test bench control apparatus may be a test platform itself or a chip or a function entity in a test platform. As shown in FIG. 8, an embodiment of this application provides a schematic diagram of a hardware structure of a test bench control apparatus.

The test bench control apparatus includes at least one processor (including one processor 801 in an example of FIG. 8 as an example for description) and at least one interface circuit 803 (including one interface circuit 803 in an example of FIG. 8 as an example for description). Optionally, the test bench control apparatus may further include at least one memory (including one memory 802 in an example of FIG. 8 as an example for description).

The processor 801, the memory 802, and the interface circuit 803 are connected through a communications line. The communication line may include a conducting path for transmitting information between the foregoing components.

The processor 801 may be a general-purpose central processing unit (central processing unit CPU), a microprocessor, an application-specific integrated circuit (application-specific integrated circuit, ASIC), or one or more integrated circuits configured to control program execution in the solutions of this application. In specific implementation, in an embodiment, the processor 801 may include a plurality of CPUs, and the processor 801 may be a single-core (single-CPU) processor or a multi-core (multi-CPU) processor. The processor herein may be one or more devices, circuits, or processing cores configured to process data (for example, a computer program instruction).

The memory 802 may be an apparatus having a storage function, for example, may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or other optical disk storage, optical disc storage (including a compressed optical disc, a laser disc, an optical disc, a digital versatile optical disc, a Blu-ray disc, and the like), a magnetic disk storage medium or another magnetic storage device, or any other medium capable of carrying or storing desired program code in the form of instructions or data structures and capable of being accessed by a computer, but not limited thereto. The memory 802 may exist independently, and is connected to the processor 801 through a communications line. Alternatively, the memory 802 may be integrated with the processor 801.

The memory 802 is configured to store a computer executable instruction for performing the solutions of this application, and the processor 801 controls the execution. Specifically, the processor 801 is configured to execute the computer executable instruction stored in the memory 802, to implement the test method for the test bench in this embodiment of this application.

Alternatively, optionally, in this embodiment of this application, the processor 801 may perform processing-related functions in the test method for the test bench provided in the following embodiments of this application, and the interface circuit 803 is responsible for connecting to other components in the test bench to implement transmission of a signal, for example, control on the connection box, which may be specifically a control signal for switching on or off the switch in the connection box. This is not specifically limited in this embodiment of this application.

Optionally, the computer executable instruction in this embodiment of this application may also be referred to as application program code or computer program code. This is not specifically limited in this embodiment of this application.

In specific implementation, in an embodiment, the processor 801 may include one or more CPUs, for example, a CPU 0 and a CPU 1 in FIG. 8.

In specific implementation, in an embodiment, the test bench control apparatus may include a plurality of processors, for example, the processor 801 and a processor 804 in FIG. 8. Each of these processors may be a single-core (single-CPU) processor, or may be a multi-core (multi-CPU) processor. The processor herein may be one or more devices, circuits, and/or processing cores configured to process data (for example, a computer program instruction).

An embodiment of this application provides a test method for a test bench of an electric vehicle, applied to an electric vehicle test apparatus in FIG. 9, and specifically including the following steps.

101. When it is determined that a to-be-tested object is a battery pack, control a connection box to electrically connect the battery pack and a power supply device, so that the power supply device charges the battery pack or the battery pack discharges into the power supply device.

Specifically, when the connection box includes a first switch, a second switch, and a third switch, where a first end of the first switch is coupled to a first end of the power supply device, a second end of the first switch is coupled to a second end of the third switch, the second end of the first switch is coupled to a second end of the fourth switch, a first end of the third switch is coupled to a first end of the battery pack, a first end of the fourth switch is coupled to a first end of the vehicle load, and a second end of the power supply device, a second end of the vehicle load, and a second end of the battery pack are coupled to a common power cable, the controlling a connection box to electrically connect the battery pack and a power supply device includes: controlling the first switch and the fourth switch to be closed, and the third switch to be open, so that the battery pack and the power supply device are electrically connected, and when the power supply device is in a power supply state, the power supply device charges the battery pack, or when the power supply device is in a power absorption state, the the battery pack discharges into the power supply device. When the power supply device is in the power supply state, the power supply device may charge the battery pack by closing the first switch and the third switch. However, a current backflow risk may exist. To be specific, when a discharge current of the battery pack exceeds a charging current of the power supply device, an actual current flow direction is from the battery pack to the power supply device. To prevent a current backflow phenomenon, the connection box further includes: a second switch and a diode. An anode of the diode is coupled to the first end of the power supply device, a first end of the second switch is coupled to a cathode of the diode, and a second end of the second switch is coupled to the second end of the first switch. The controlling a connection box to electrically connect the battery pack and a power supply device includes: controlling the second switch and the third switch to be closed, and the first switch and the fourth switch to be open, so that the battery pack and the power supply device are electrically connected, and the power supply device is in the power supply state, and charges the battery pack.

102. When it is determined that a to-be-tested object is a vehicle load, if it is determined that an energy source is a power supply device, control a connection box to electrically connect the power supply device and the vehicle load, so that the power supply device supplies power to the vehicle load, or if it is determined that an energy source is a battery pack, control a connection box to electrically connect the battery pack and the vehicle load, so that the battery pack supplies power to the vehicle load.

Specifically, when the connection box includes the first switch, the second switch, and the third switch, the controlling a connection box to electrically connect the power supply device and the vehicle load includes: controlling the first switch and the third switch to be closed, and the fourth switch to be open, so that the power supply device and the vehicle load are electrically connected, and the power supply device supplies power to the vehicle load. The controlling a connection box to electrically connect the battery pack and the vehicle load includes: controlling the third switch and the fourth switch to be closed, and the first switch to be open, so that the battery pack and the vehicle load are electrically connected, and the battery pack supplies power to the vehicle load. When the connection box further includes a second switch and a diode, the controlling the connection box to electrically connect the power supply device and the vehicle load includes: controlling the second switch and the fourth switch to be closed, and the first switch and the third switch to be open, so that the power supply device and the vehicle load are electrically connected, and the power supply device supplies power to the vehicle load.

In this way, because the connection box is separately coupled to the battery pack, the vehicle load, and the power supply device on the test bench of the electric vehicle, the method can be used to control the connection box to separately electrically connect the battery pack and the vehicle load, or electrically connect the battery pack and the power supply device, or electrically connect the power supply device and the vehicle load. Therefore, when the battery pack and the vehicle load are electrically connected, the battery pack supplies power to the vehicle load, thereby implementing a power supply loop between the battery pack and the vehicle load. When the battery pack and the power supply device are electrically connected, the power supply device charges the battery pack, thereby implementing a charging loop in which the power supply device charges the battery pack, or when the battery pack and the power supply device are electrically connected, the battery pack discharges into the power supply device, thereby implementing a discharging loop in which the battery pack discharges into the power supply device. When the power supply device and the vehicle load are electrically connected, the power supply device supplies power to the vehicle load, thereby implementing a power supply loop from the power supply device to the vehicle load. The foregoing implements a plurality of loops of an energy flow on the test bench of the electric vehicle, implements a flexibly controllable energy flow, and expands test functions of the test bench of the electric vehicle.

In another example, an embodiment of this application further provides abnormal working condition detection. When an abnormal working condition such as a high current occurs in the loop, a switch in the loop can be actively switched off. For example, the connection box further includes one or more of the following: a first current sensor coupled between the first end of the power supply device and the first end of the first switch; a second current sensor coupled between the first end of the battery pack and the first end of the third switch; and a third current sensor coupled between the first end of the vehicle load and the fourth switch. The method further includes: when the first switch and the fourth switch are closed, and the third switch is open, if it is determined, based on a current collected by the first current sensor and/or a current collected by the third current sensor, that an abnormal working condition exists, controlling the first switch and/or the fourth switch to be open; or when the first switch and the third switch are closed, if it is determined, based on a current collected by the first current sensor and/or a current collected by the second current sensor, that an abnormal working condition exists, controlling the first switch and/or the third switch to be open; or when the third switch and the fourth switch are closed, and the first switch is open, if it is determined, based on a current collected by the second current sensor and/or a current collected by the third current sensor, that an abnormal working condition exists, controlling the third switch and/or the fourth switch to be open.

In another example, when the connection box further includes a second switch and a diode, the method further includes: when the second switch and the third switch are closed, and the first switch and the fourth switch are open, if it is determined, based on a current collected by the first current sensor and/or a current collected by the second current sensor, that an abnormal working condition exists, controlling the second switch and/or the third switch to be open; or when the second switch and the fourth switch are closed, and the first switch and the third switch are open, if it is determined, based on the current collected by the first current sensor and/or a current collected by the third current sensor, that an abnormal working condition exists, controlling the second switch and/or the fourth switch to be open.

In addition, after the test is completed, each switch needs to be prevented from damage caused by disconnection of the switch with load, especially when the switch uses a relay. Because there is a contact process of a contact point during disconnection or connection of the switch with load, and a contact area of the contact point changes instantaneously during this process, there is a process in which a passing current increases or decreases instantaneously, which easily causes melting of the contact point of the relay, and affects a service life of the relay. Therefore, the connection box further includes one or more of the following: a first current sensor coupled between the first end of the power supply device and the first end of the first switch; a second current sensor coupled between the first end of the battery pack and the first end of the third switch; and a third current sensor coupled between the first end of the vehicle load and the fourth switch. The method further includes: after it is determined that a test is completed, when the first switch and the fourth switch are closed, and the third switch is open, if it is determined that a current collected by the first current sensor meets a first condition and/or a current collected by the third current sensor meets a third condition, controlling the first switch and/or the fourth switch to be open; or after it is determined that a test is completed, when the first switch and the third switch are closed, and the fourth switch is open, if it is determined that a current collected by the first current sensor meets a first condition and/or a current collected by the second current sensor meets a third condition, controlling the first switch and/or the third switch to be open; or after it is determined that a test is completed, when the third switch and the fourth switch are closed, and the first switch is open, if it is determined that a current collected by the second current sensor meets a first condition and/or a current collected by the third current sensor meets a third condition, controlling the third switch and/or the fourth switch to be open. The foregoing first condition, second condition, and third condition may be current thresholds designed based on a withstand current of the switch. After the test is completed, a corresponding switch is controlled to be open only after a current in the loop decreases to a corresponding current threshold. For example, a current threshold of 5A may be designed. In this case, when it is determined that the test is completed, a circuit in the loop is controlled to be open only when the current in the corresponding loop detected by the current sensor is less than 5A. Settings of the first condition, the second condition, and the third condition are subject to selection of the switch, and may be the same or different. For example, for a switch with a relatively high withstand current, a specified disconnection reference current may be appropriately increased, and for a switch with a relatively low withstand current, a specified disconnection reference current may be appropriately decreased.

In another example, when the connection box further includes a second switch and a diode, after it is determined that the test is completed, the second switch and the third switch are controlled to be closed, and the first switch and the fourth switch are controlled to be open, so that the battery pack is coupled to the power supply device, and the power supply device is in the power supply state, and charges the battery pack; or after it is determined that the test is completed, the second switch and the fourth switch are controlled to be closed, and the first switch and the third switch are controlled to be open, so that the power supply device is coupled to the vehicle load, and the power supply device supplies power to the vehicle load.

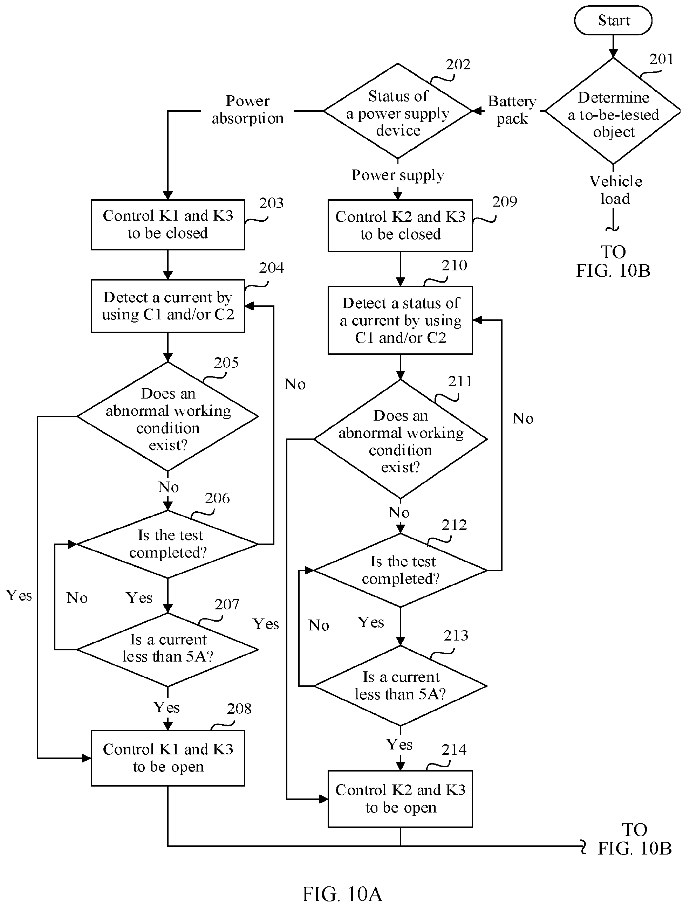

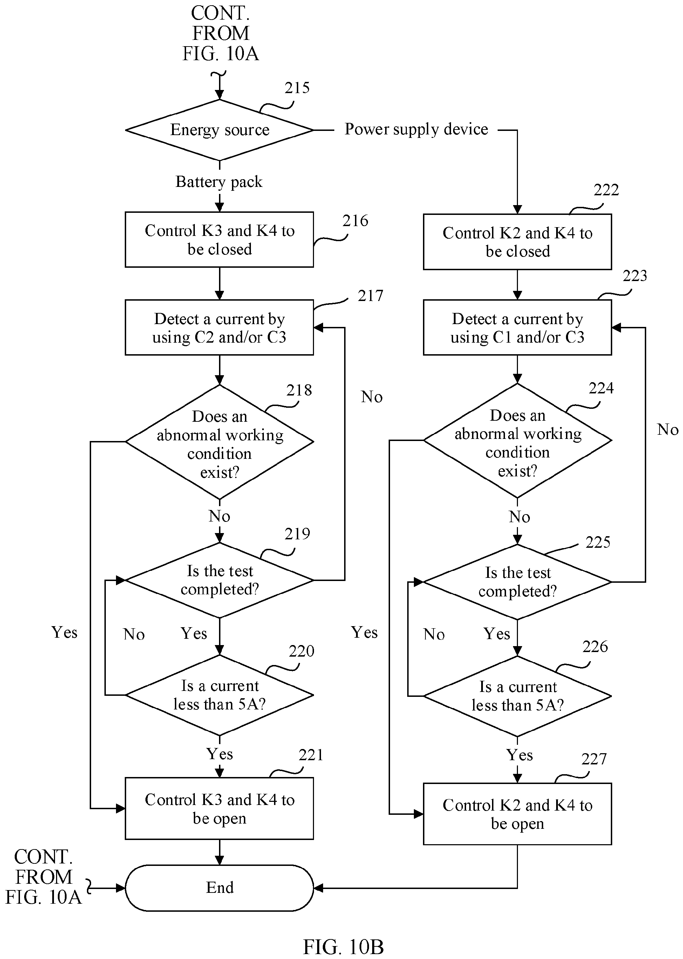

Refer to FIG. 6, FIG. 10A, and FIG. 10B. A control method for a test bench of an electric vehicle provided in an embodiment of this application is described. The following switches use relays as an example for description. In the following example, the relay is in a closed state when being powered on, and the relay is in an open state when being powered off. Therefore, in the following description, a normal state of each switch is an open state, and the relay is in the closed state only when the switch is controlled to be closed, that is, when the relay is powered on. In addition, that the foregoing first condition, second condition, and third condition each are less than 5A is used as an example for description.

201. Determine a to-be-tested object.

When it is determined that the to-be-tested object is a battery pack, go to step 202, or when it is determined that the to-be-tested object is a vehicle load, go to step 214.

202. Determine a status of a power supply device.

When it is determined that the status of the power supply device is an energy absorption state, go to step 203; or when it is determined that the status of the power supply device is a power supply state, go to step 209.

203. Control K1 and K3 to be closed.

204. Detect a current by using C1 and/or C2.

It should be understood herein that, because C1 and C2 are in a same loop, current values detected are the same, and therefore the current may be detected only by using C1, or only by using C2, or by using both C1 and C2.

205. Determine whether an abnormal working condition exists based on the current detected by C1 and/or C2.

For example, if a large current exceeding an abnormal detection threshold current exists in C1 and/or C2, it is determined that an abnormal working condition exists. When it is determined that an abnormal working condition exists, go to step 208, or when it is determined that no abnormal working condition exists, go to step 206.

206. Determine whether a test is completed.

When it is determined that the test is completed, go to step 207, or when it is determined that the test is not completed, go to step 204.

207. Determine whether the current detected by C1 and/or C2 is less than 5A.

When it is determined that the current detected by C1 and/or C2 is less than 5A, go to step 208; otherwise, go to step 206.

208. Control K1 and K3 to be open.

209. Control K2 and K3 to be closed.

210. Detect a current by using C1 and/or C2.

It should be understood herein that, because C1 and C2 are in a same loop, current values detected are the same, and therefore the current may be detected only by using C1, or only by using C2, or by using both C1 and C2.

211. Determine whether an abnormal working condition exists based on the current detected by C1 and/or C2.

For example, if a large current exceeding an abnormal detection threshold current exists in C1 and/or C2, it is determined that an abnormal working condition exists. When it is determined that an abnormal working condition exists, go to step 214, or when it is determined that no abnormal working condition exists, go to step 212.

212. Determine whether the test is completed.

When it is determined that the test is completed, go to step 213, or when it is determined that the test is not completed, go to step 210.

213. Determine whether the current detected by C1 and/or C2 is less than 5A.

When it is determined that the current detected by C1 and/or C2 is less than 5A, go to step 214; otherwise, go to step 212.

214. Control K2 and K3 to be open.

215. Determine an energy source.

When it is determined that the energy source is the battery pack, go to step 216, or when it is determined that the energy source is the power supply device, go to step 222.

216. Control K3 and K4 to be closed.

217. Detect a current by using C2 and/or C3.

It should be understood herein that, because C2 and C3 are in a same loop, current values detected are the same, and therefore the current may be detected only by using C2, or only by using C3, or by using both C2 and C3.

218. Determine whether an abnormal working condition exists based on the current detected by C2 and/or C3.

For example, if a large current exceeding an abnormal detection threshold current exists in C2 and/or C3, it is determined that an abnormal working condition exists. When it is determined that an abnormal working condition exists, go to step 221, or when it is determined that no abnormal working conditions exist, go to step 219.

219. Determine whether the test is completed.

When it is determined that the test is completed, go to step 220, or when it is determined that the test is not completed, go to step 217.

220. Determine whether the current detected by C2 and/or C3 is less than 5A.

When it is determined that the current detected by C2 and/or C3 is less than 5A, go to step 221; otherwise, go to step 219.

221. Control K3 and K4 to be open.

222. Control K2 and K4 to be closed.

223. Detect the current by using C1 and/or C3.

It should be understood herein that, because C1 and C3 are in a same loop, current values detected are the same, and therefore the current may be detected only by using C1, or only by using C3, or by both C1 and C3.

224. Determine whether an abnormal working condition exists based on the current detected by C1 and/or C3.

For example, if a large current exceeding an abnormal detection threshold current exists in C1 and/or C3, it is determined that an abnormal working condition exists. When it is determined that an abnormal working condition exists, go to step 227, or when it is determined that no abnormal working condition exists, go to step 225.

225. Determine whether the test is completed.

When it is determined that the test is completed, go to step 226, or when it is determined that the test is not completed, go to step 223.

226. Determine whether the current detected by C1 and/or C3 is less than 5A.

When it is determined that the current detected by C1 and/or C3 is less than 5A, go to step 227; otherwise, go to step 225.

227. Control K2 and K4 to be open.

It may be understood that, in the foregoing embodiments, the method and/or steps implemented by a test bench control apparatus of the electric vehicle may also be implemented by a component (for example, a chip or a circuit) that can be used in the test bench control apparatus of the electric vehicle.

It may be understood that, to implement the foregoing functions, the test bench control apparatus of the electric vehicle includes corresponding hardware structures and/or software modules for performing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, division into function modules may be performed on the test bench control apparatus of the electric vehicle according to the foregoing method embodiment. For example, each function module may be obtained through division corresponding to each function, or two or more functions may be integrated into one processing module. The integrated module may be implemented in a form of hardware, or may be implemented in a form of a software function module. It should be noted that, in this embodiment of this application, module division is an example, and is merely a logical function division. In actual implementation, another division manner may be used.

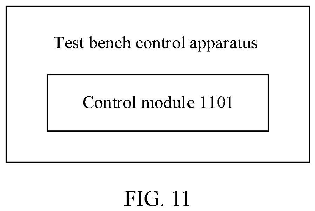

FIG. 11 is a schematic structural diagram of a test bench control apparatus. The test bench control apparatus includes a control module 1101.

All related content of the steps in the foregoing method embodiments may be referenced to function descriptions of corresponding function modules, and details are not described herein again.

In this embodiment, the test bench control apparatus is presented in a form of dividing function modules in an integrated manner. The "module" herein may mean a specific ASIC, a circuit, a processor and a memory that execute one or more software or firmware programs, an integrated logic circuit, and/or another device that can provide the foregoing functions.

For example, the processor 801 in the test bench control apparatus shown in FIG. 8 may invoke a computer executable instruction stored in the memory 802, so that the test bench control apparatus performs the method in the foregoing method embodiment. Specifically, a function/implementation process of the control module 1101 in FIG. 11 may be implemented by the processor 801 in the test bench control apparatus shown in FIG. 8 by invoking the computer executable instruction stored in the memory 802. Because the test bench control apparatus provided in this embodiment may perform the foregoing method, for technical effects that can be obtained by the test bench control apparatus provided in this embodiment, reference may be made to the foregoing method embodiment, and details are not described herein again.

Specifically, the control module 1101 is configured to: when it is determined that a to-be-tested object is a battery pack, control a connection box to electrically connect the battery pack and a power supply device, so that the power supply device charges the battery pack, or the battery pack discharges into the power supply device; or when it is determined that a to-be-tested object is a vehicle load, if it is determined that an energy source is a power supply device, control a connection box to electrically connect the power supply device and the vehicle load, so that the power supply device supplies power to the vehicle load, or if it is determined that an energy source is a battery pack, control a connection box to electrically connect the battery pack and the vehicle load, so that the battery pack supplies power to the vehicle load.

Optionally, the connection box includes a first switch, a second switch, and a third switch, where a first end of the first switch is coupled to a first end of the power supply device, a second end of the first switch is coupled to a second end of the third switch, and the second end of the first switch is coupled to a second end of the fourth switch; a first end of the third switch is coupled to a first end of the battery pack, and a first end of the fourth switch is coupled to a first end of the vehicle load; and a second end of the power supply device, a second end of the vehicle load, and a second end of the battery pack are coupled to a common power cable. The control module 1101 is specifically configured to control the first switch and the fourth switch to be closed, and the third switch to be open, so that the battery pack and the power supply device are electrically connected, and when the power supply device is in a power supply state, the power supply device charges the battery pack, or when the power supply device is in a power absorption state, the battery pack discharges into the power supply device. The control module 1101 is specifically configured to control the first switch and the third switch to be closed, and the fourth switch to be open, so that the power supply device and the vehicle load are electrically connected, and the power supply device supplies power to the vehicle load. The control module 1101 is specifically configured to control the third switch and the fourth switch to be closed, and the first switch to be open, so that the battery pack and the vehicle load are electrically connected, and the battery pack supplies power to the vehicle load.

Optionally, the connection box further includes a second switch and a diode, where an anode of the diode is coupled to the first end of the power supply device, a first end of the second switch is coupled to a cathode of the diode, and a second end of the second switch is coupled to the second end of the first switch. The control module 1101 is specifically configured to control the second switch and the third switch to be closed, and the first switch and the fourth switch to be open, so that the battery pack and the power supply device are electrically connected, so that the power supply device is in a power supply state, and charges the battery pack. The control module 1101 is specifically configured to control the second switch and the fourth switch to be closed, and the first switch and the third switch to be open, so that the power supply device and the vehicle load are electrically connected, and the power supply device supplies power to the vehicle load.

Optionally, the connection box further includes one or more of the following: a first current sensor coupled between the first end of the power supply device and the first end of the first switch; a second current sensor coupled between the first end of the battery pack and the first end of the third switch; and a third current sensor coupled between the first end of the vehicle load and the fourth switch. The control module 1101 is further configured to: after it is determined that a test is completed, when the first switch and the fourth switch are closed, and the third switch is open, if it is determined that a current collected by the first current sensor meets a first condition and/or a current collected by a third current sensor meets a third condition, control the first switch and/or the fourth switch to be open; or after it is determined that a test is completed, when the first switch and the third switch are closed, and the fourth switch is open, if it is determined that a current collected by the first current sensor meets a first condition and/or a current collected by the second current sensor meets a second condition, control the first switch and/or the third switch to be open; or after it is determined that a test is completed, when the third switch and the fourth switch are closed, and the first switch is open, if it is determined that a current collected by the second current sensor meets a second condition and/or a current collected by the third current sensor meets a third condition, control the third switch and/or the fourth switch to be open.

Optionally, the connection box further includes one or more of the following: a first current sensor coupled between the first end of the power supply device and the first end of the first switch; a second current sensor coupled between the first end of the battery pack and the first end of the third switch; and a third current sensor coupled between the first end of the vehicle load and the fourth switch. The control module 1101 is further configured to: after it is determined that a test is completed, when the second switch and the third switch are closed, and the first switch and the fourth switch are open, if it is determined that a current collected by the first current sensor meets a first condition and/or a current collected by the second current sensor meets a second condition, control the second switch and/or the third switch to be open; or after it is determined that a test is completed, when the second switch and the fourth switch are closed, and the first switch and the third switch are open, if it is determined that a current collected by the first current sensor meets a first condition and/or a current collected by the third current sensor meets a third condition, control the second switch and/or the fourth switch to be open.

Optionally, the connection box further includes one or more of the following: a first current sensor coupled between the first end of the power supply device and the first end of the first switch; a second current sensor coupled between the first end of the battery pack and the first end of the third switch; and a third current sensor coupled between the first end of the vehicle load and the fourth switch. The control module 1101 is further configured to: when the first switch and the fourth switch are closed, and the third switch is open, if it is determined, based on a current collected by the first current sensor and/or a current collected by the third current sensor, that an abnormal working condition exists, control the first switch and/or the fourth switch to be open; or when the first switch and the third switch are closed, if it is determined, based on a current collected by the first current sensor and/or a current collected by the second current sensor, that an abnormal working condition exists, control the first switch and/or the third switch to be open; or when the third switch and the fourth switch are closed, and the first switch is open, if it is determined, based on a current collected by the second current sensor and/or a current collected by the third current sensor, that an abnormal working condition exists, control the third switch and/or the fourth switch to be open.

Optionally, the connection box further includes one or more of the following: a first current sensor coupled between the first end of the power supply device and the first end of the first switch; a second current sensor coupled between the first end of the battery pack and the first end of the third switch; and a third current sensor coupled between the first end and the fourth switch. The control module 1101 is further configured to: when the second switch and the third switch are closed, and the first switch and the fourth switch are open, if it is determined, based on a current collected by the first current sensor and/or a current collected by the second current sensor, that an abnormal working condition exists, control the second switch and/or the third switch to be open; or when the second switch and the fourth switch are closed, and the first switch and the third switch are open, if it is determined, based on a current collected by the first current sensor and/or a current collected by the third current sensor, that an abnormal working condition exists, control the second switch and/or the fourth switch to be open.

All related content of the steps in the foregoing method embodiments may be referenced to function descriptions of corresponding function modules, and details are not described herein again.

Optionally, an embodiment of this application further provides a test bench control apparatus (for example, the test bench control apparatus may be a chip or a chip system). The test bench control apparatus includes a processor, configured to implement the method in any one of the foregoing method embodiments. In a possible design, the test bench control apparatus further includes a memory. The memory is configured to store necessary program instructions and data, and the processor may invoke program code stored in the memory to instruct the test bench control apparatus to perform the method in any one of the foregoing method embodiments. Certainly, the memory may alternatively not be in the test bench control device. When the test bench control apparatus is a chip system, the test bench control apparatus may include a chip, or may include a chip and another discrete component. This is not specifically limited in this embodiment of this application.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instruction may be stored in a computer readable storage medium, or transmitted from one computer readable storage medium to another computer readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. In this embodiment of this application, the computer may include the foregoing apparatus.

Although this application is described with reference to the embodiments, in a process of implementing this application that claims protection, persons skilled in the art may understand and implement another variation of the disclosed embodiments by viewing the accompanying drawings, disclosed content, and the appended claims. In the claims, "comprising" does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clearly that various modifications and combinations may be made to them without departing from the spirit and scope of this application. Correspondingly, the specification and accompanying drawings are merely example description of this application defined by the appended claims, and is considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A connection box, used for a test bench of an electric vehicle, wherein the connection box is separately coupled to a battery pack, a vehicle load, and a power supply device on the test bench of the electric vehicle;
the connection box in a first state is configured to electrically connect the battery pack and the vehicle load, the connection box in a second state is configured to electrically connect the battery pack and the power supply device, and the connection box in a third state is configured to electrically connect the power supply device and the vehicle load; and
when the connection box electrically connects the battery pack and the vehicle load, the battery pack supplies power to the vehicle load; when the connection box electrically connects the battery pack and the power supply device, the power supply device charges the battery pack, or the battery pack discharges into the power supply device; and when the connection box electrically connects the power supply device and the vehicle load, the power supply device supplies power to the vehicle load.

2. The connection box according to claim 1, wherein the connection box comprises a first switch, a third switch, and a fourth switch, a first end of the first switch is coupled to a first end of the power supply device, a second end of the first switch is coupled to a second end of the third switch, and the second end of the first switch is coupled to a second end of the fourth switch;
a first end of the third switch is coupled to a first end of the battery pack, a first end of the fourth switch is coupled to a first end of the vehicle load, and a second end of the power supply device, a second end of the vehicle load, and a second end of the battery pack are coupled to a common power cable;
when the third switch and the fourth switch are closed, and the first switch is open, the battery pack and the vehicle load are electrically connected, and the battery pack supplies power to the vehicle load;
when the first switch and the third switch are closed, and the fourth switch is open, the power supply device and the vehicle load are electrically connected, and the power supply device supplies power to the vehicle load; and
when the first switch and the fourth switch are closed, and the third switch is open, the battery pack and the power supply device are electrically connected, and when the power supply device is in a power supply state, the battery pack is charged, or when the power supply device is in a power absorption state, the battery pack discharges into the power supply device.

3. The connection box according to claim 2, wherein the connection box further comprises a second switch and a diode, an anode of the diode is coupled to the first end of the power supply device, a first end of the second switch is coupled to a cathode of the diode, and a second end of the second switch is coupled to the second end of the first switch;
when the second switch and the third switch are closed, and the first switch and the fourth switch are open, the battery pack and the power supply device are electrically connected, the power supply device is in the power supply state, and the battery pack is charged; and
when the second switch and the fourth switch are closed, and the first switch and the third switch are open, the power supply device and the vehicle load are electrically connected, and the power supply device supplies power to the vehicle load.

4. The connection box according to claim 2, wherein the connection box further comprises one or more of the following: a first current sensor coupled between the first end of the power supply device and the first end of the first switch, a second current sensor coupled between the first end of the battery pack and the first end of the third switch, and a third current sensor coupled between the first end of the vehicle load and the fourth switch.

5. The connection box according to claim 2, wherein the connection box further comprises one or more of the following: a first fuse coupled between the second end of the first switch and the second end of the third switch, and a second fuse coupled between the second end of the first switch and the second end of the fourth switch.

6. A control method for a test bench of an electric vehicle, used for a test bench of an electric vehicle, wherein a connection box on the test bench of the electric vehicle is separately coupled to a battery pack, a vehicle load, and a power supply device on the test bench of the electric vehicle, and the method comprises:
when it is determined that a to-be-tested object is the battery pack, controlling the connection box to electrically connect the battery pack and the power supply device, so that the power supply device charges the battery pack or the battery pack discharges into the power supply device; or
when it is determined that a to-be-tested object is the vehicle load, if it is determined that an energy source is the power supply device, controlling the connection box to electrically connect the power supply device and the vehicle load, so that the power supply device supplies power to the vehicle load, or if it is determined that an energy source is the battery pack, controlling the connection box to electrically connect the battery pack and the vehicle load, so that the battery pack supplies power to the vehicle load.

7. The control method for a test bench of an electric vehicle according to claim 6, wherein the connection box comprises a first switch, a second switch, and a third switch, a first end of the first switch is coupled to a first end of the power supply device, a second end of the first switch is coupled to a second end of the third switch, and the second end of the first switch is coupled to a second end of the fourth switch; a first end of the third switch is coupled to a first end of the battery pack, and a first end of the fourth switch is coupled to a first end of the vehicle load; and a second end of the power supply device, a second end of the vehicle load, and a second end of the battery pack are coupled to a common power cable;
the controlling the connection box to electrically connect the battery pack and the power supply device comprises:
controlling the first switch and the fourth switch to be closed, and the third switch to be open, so that the battery pack and the power supply device are electrically connected, and when the power supply device is in a power supply state, the power supply device charges the battery pack, or when the power supply device is in a power absorption state, the battery pack discharges into the power supply device;
the controlling the connection box to electrically connect the power supply device and the vehicle load comprises:
controlling the first switch and the third switch to be closed, and the fourth switch to be open, so that the power supply device and the vehicle load are electrically connected, and the power supply device supplies power to the vehicle load; and
the controlling the connection box to electrically connect the battery pack and the vehicle load comprises:
controlling the third switch and the fourth switch to be closed, and the first switch to be open, so that the battery pack and the vehicle load are electrically connected, and the battery pack supplies power to the vehicle load.

8. The control method for a test bench of an electric vehicle according to claim 7, wherein the connection box further comprises a second switch and a diode, an anode of the diode is coupled to the first end of the power supply device, a first end of the second switch is coupled to a cathode of the diode, and a second end of the second switch is coupled to the second end of the first switch;
the controlling the connection box to electrically connect the battery pack and the power supply device comprises:
controlling the second switch and the third switch to be closed, and the first switch and the fourth switch to be open, so that the battery pack and the power supply device are electrically connected, and the power supply device is in the power supply state and charges the battery pack; and
the controlling the connection box to electrically connect the power supply device and the vehicle load comprises:
controlling the second switch and the fourth switch to be closed, and the first switch and the third switch to be open, so that the power supply device and the vehicle load are electrically connected, and the power supply device supplies power to the vehicle load.

9. The control method for a test bench of an electric vehicle according to claim 7, wherein the connection box further comprises one or more of the following: a first current sensor coupled between the first end of the power supply device and the first end of the first switch, a second current sensor coupled between the first end of the battery pack and the first end of the third switch, and a third current sensor coupled between the first end of the vehicle load and the fourth switch; and
the method further comprises: after it is determined that a test is completed, when the first switch and the fourth switch are closed, and the third switch is open, if it is determined that a current collected by the first current sensor meets a first condition and/or a current collected by the third current sensor meets a third condition, controlling the first switch and/or the fourth switch to be open;
after it is determined that a test is completed, when the first switch and the third switch are closed, and the fourth switch is open, if it is determined that a current collected by the first current sensor meets a first condition and/or a current collected by the second current sensor meets a second condition, controlling the first switch and/or the third switch to be open; or
after it is determined that a test is completed, when the third switch and the fourth switch are closed, and the first switch is open, if it is determined that a current collected by the second current sensor meets a second condition and/or a current collected by the third current sensor meets a third condition, controlling the third switch and/or the fourth switch to be open.

10. The control method for a test bench of an electric vehicle according to claim 8, wherein the connection box further comprises one or more of the following: a first current sensor coupled between the first end of the power supply device and the first end of the first switch, a second current sensor coupled between the first end of the battery pack and the first end of the third switch, and a third current sensor coupled between the first end of the vehicle load and the fourth switch; and the method further comprises:
after it is determined that a test is completed, when the second switch and the third switch are closed, and the first switch and the fourth switch are open, if it is determined that a current collected by the first current sensor meets a first condition and/or a current collected by the second current sensor meets a second condition, controlling the second switch and/or the third switch to be open; or
after it is determined that a test is completed, when the second switch and the fourth switch are closed, and the first switch and the third switch are open, if it is determined that a current collected by the first current sensor meets a first condition and/or a current collected by the third current sensor meets a third condition, controlling the second switch and/or the fourth switch to be open.

11. The control method for a test bench of an electric vehicle according to claim 7, wherein the connection box further comprises one or more of the following: a first current sensor coupled between the first end of the power supply device and the first end of the first switch, a second current sensor coupled between the first end of the battery pack and the first end of the third switch, and a third current sensor coupled between the first end of the vehicle load and the fourth switch; and
the method further comprises: when the first switch and the fourth switch are closed, and the third switch is open, if it is determined, based on a current collected by the first current sensor and/or a current collected by the third current sensor, that an abnormal working condition exists, controlling the first switch and/or the fourth switch to be open;
when the first switch and the third switch are closed, if it is determined, based on a current collected by the first current sensor and/or a current collected by the second current sensor, that an abnormal working condition exists, controlling the first switch and/or the third switch to be open; or
when the third switch and the fourth switch are closed, and the first switch is open, if it is determined, based on a current collected by the second current sensor and/or a current collected by the third current sensor, that an abnormal working condition exists, controlling the third switch and/or the fourth switch to be open.

12. The control method for a test bench of an electric vehicle according to claim 8, wherein the connection box further comprises one or more of the following: a first current sensor coupled between the first end of the power supply device and the first end of the first switch, a second current sensor coupled between the first end of the battery pack and the first end of the third switch, and a third current sensor coupled between the first end of the vehicle load and the fourth switch; and the method further comprises:
when the second switch and the third switch are closed, and the first switch and the fourth switch are open, if it is determined, based on a current collected by the first current sensor and/or a current collected by the second current sensor, that an abnormal working condition exists, controlling the second switch and/or the third switch to be open; or
when the second switch and the fourth switch are closed, and the first switch and the third switch are open, if it is determined, based on a current collected by the first current sensor and/or a current collected by the third current sensor, that an abnormal working condition exists, controlling the second switch and/or the fourth switch to be open.

13. A test bench control apparatus of an electric vehicle, used for a test bench of an electric vehicle, wherein a connection box is separately coupled to a battery pack, a vehicle load, and a power supply device on the test bench of the electric vehicle, and the control apparatus comprises:
a control module, configured to: when it is determined that a to-be-tested object is the battery pack, control the connection box to electrically connect the battery pack and the power supply device, so that the power supply device charges the battery pack, or the battery pack discharges into the power supply device; or when it is determined that a to-be-tested object is the vehicle load, if it is determined that an energy source is the power supply device, control the connection box to electrically connect the power supply device and the vehicle load, so that the power supply device supplies power to the vehicle load, or if it is determined that an energy source is the battery pack, control the connection box to electrically connect the battery pack and the vehicle load, so that the battery pack supplies power to the vehicle load.

14. The test bench control apparatus of an electric vehicle according to claim 13, wherein the connection box comprises a first switch, a second switch, and a third switch, a first end of the first switch is coupled to a first end of the power supply device, a second end of the first switch is coupled to a second end of the third switch, and the second end of the first switch is coupled to a second end of the fourth switch; a first end of the third switch is coupled to a first end of the battery pack, and a first end of the fourth switch is coupled to a first end of the vehicle load; and a second end of the power supply device, a second end of the vehicle load, and a second end of the battery pack are coupled to a common power cable;
the control module is specifically configured to control the first switch and the fourth switch to be closed, and the third switch to be open, so that the battery pack and the power supply device are electrically connected, and when the power supply device is in a power supply state, the power supply device charges the battery pack, or when the power supply device is in a power absorption state, the battery pack discharges into the power supply device;
the control module is specifically configured to control the first switch and the third switch to be closed, and the fourth switch to be open, so that the power supply device and the vehicle load are electrically connected, and the power supply device supplies power to the vehicle load; and
the control module is specifically configured to control the third switch and the fourth switch to be closed, and the first switch to be open, so that the battery pack and the vehicle load are electrically connected, and the battery pack supplies power to the vehicle load.

15. The test bench control apparatus of an electric vehicle according to claim 14, wherein the connection box further comprises a second switch and a diode, an anode of the diode is coupled to the first end of the power supply device, a first end of the second switch is coupled to a cathode of the diode, and a second end of the second switch is coupled to the second end of the first switch;
the control module is specifically configured to control the second switch and the third switch to be closed, and the first switch and the fourth switch to be open, so that the battery pack and the power supply device are electrically connected, and the power supply device is in the power supply state and charges the battery pack; and
the control module is specifically configured to control the second switch and the fourth switch to be closed, and the first switch and the third switch to be open, so that the power supply device and the vehicle load are electrically connected, and the power supply device supplies power to the vehicle load.

16. The test bench control apparatus of an electric vehicle according to claim 14, wherein the connection box further comprises one or more of the following: a first current sensor coupled between the first end of the power supply device and the first end of the first switch, a second current sensor coupled between the first end of the battery pack and the first end of the third switch, and a third current sensor coupled between the first end of the vehicle load and the fourth switch; and
the control module is further configured to: after it is determined that a test is completed, when the first switch and the fourth switch are closed, and the third switch is open, if it is determined that a current collected by the first current sensor meets a first condition and/or a current collected by a third current sensor meets a third condition, control the first switch and/or the fourth switch to be open; or after it is determined that a test is completed, when the first switch and the third switch are closed, and the fourth switch is open, if it is determined that a current collected by the first current sensor meets a first condition and/or a current collected by the second current sensor meets a second condition, control the first switch and/or the third switch to be open; or after it is determined that a test is completed, when the third switch and the fourth switch are closed, and the first switch is open, if it is determined that a current collected by the second current sensor meets a second condition and/or a current collected by the third current sensor meets a third condition, control the third switch and/or the fourth switch to be open.

17. The test bench control apparatus of an electric vehicle according to claim 15, wherein the connection box further comprises one or more of the following: a first current sensor coupled between the first end of the power supply device and the first end of the first switch, a second current sensor coupled between the first end of the battery pack and the first end of the third switch, and a third current sensor coupled between the first end of the vehicle load and the fourth switch; and
the control module is further configured to: after it is determined that a test is completed, when the second switch and the third switch are closed, and the first switch and the fourth switch are open, if it is determined that a current collected by the first current sensor meets a first condition and/or a current collected by the second current sensor meets a second condition, control the second switch and/or the third switch to be open; or after it is determined that a test is completed, when the second switch and the fourth switch are closed, and the first switch and the third switch are open, if it is determined that a current collected by the first current sensor meets a first condition and/or a current collected by the third current sensor meets a third condition, control the second switch and/or the fourth switch to be open.

18. The test bench control apparatus of an electric vehicle according to claim 14, wherein the connection box further comprises one or more of the following: a first current sensor coupled between the first end of the power supply device and the first end of the first switch, a second current sensor coupled between the first end of the battery pack and the first end of the third switch, and a third current sensor coupled between the first end of the vehicle load and the fourth switch; and
the control module is further configured to: when the first switch and the fourth switch are closed, and the third switch is open, if it is determined, based on a current collected by the first current sensor and/or a current collected by the third current sensor, that an abnormal working condition exists, control the first switch and/or the fourth switch to be open; or when the first switch and the third switch are closed, if it is determined, based on a current collected by the first current sensor and/or a current collected by the second current sensor, that an abnormal working condition exists, control the first switch and/or the third switch to be open; or when the third switch and the fourth switch are closed, and the first switch is open, if it is determined, based on a current collected by the second current sensor and/or a current collected by the third current sensor, that an abnormal working condition exists, control the third switch and/or the fourth switch to be open.

19. The test bench control apparatus of an electric vehicle according to claim 15, wherein the connection box further comprises one or more of the following: a first current sensor coupled between the first end of the power supply device and the first end of the first switch, a second current sensor coupled between the first end of the battery pack and the first end of the third switch, and a third current sensor coupled between the first end of the vehicle load and the fourth switch; and
the control module is further configured to: when the second switch and the third switch are closed, and the first switch and the fourth switch are open, if it is determined, based on a current collected by the first current sensor and/or a current collected by the second current sensor, that an abnormal working condition exists, control the second switch and/or the third switch to be open; or when the second switch and the fourth switch are closed, and the first switch and the third switch are open, if it is determined, based on a current collected by the first current sensor and/or a current collected by the third current sensor, that an abnormal working condition exists, control the second switch and/or the fourth switch to be open.

20. A test bench control apparatus of an electric vehicle, used for a test bench of an electric vehicle, wherein a connection box is separately coupled to a battery pack, a vehicle load, and a power supply device on the test bench of the electric vehicle, and the control apparatus comprises: a processor and a memory.
the memory is configured to store a computer executable instruction, and the processor executes the computer executable instruction, so that the test bench control apparatus of an electric vehicle performs the method according to any one of claims 6 to 12.

21. A computer readable storage medium, comprising an instruction, wherein when the instruction is run on a computer, the computer is enabled to perform the method according to any one of claims 6 to 12.

22. A test bench of an electric vehicle, comprising the connection box according to any one of claims 1 to 5.
